# EUROPEAN PATENT APPLICATION

(11) **EP 4 600 935 A1**
(43) Date of publication of application: **13.08.2025**
(21) Application number: 25156539.6
(22) Date of filing: 07.02.2025
(51) Int. Cl.: G08G 5/21, G08G 5/53, G08G 5/55, G08G 5/72, G08G 5/78

(54) **WAKE TURBULENCE ALERT SYSTEMS AND METHODS**

(30) Priority: 08.02.2024 US 202418436296
(71) Applicant: The Boeing Company, Arlington, VA 22202 (US)
(72) Inventor: OLNEY, Lance, ARLINGTON,, 22202 (US)
(74) Representative: Plasseraud IP

(57) **Abstract**

A system and a method include a control unit configured to monitor a first position of an ownship aircraft within an airspace, determine a projected path for the ownship aircraft within the airspace, monitor a second position of a target aircraft within an airspace, and determine a projected wake turbulence of the target aircraft within the airspace. The ownship aircraft is configured to be operated to avoid the projected wake turbulence.

## Description

### FIELD OF THE DISCLOSURE

Examples of the present disclosure generally relate to systems and methods for determining wake turbulence of an aircraft within an airspace, and alerting pilots of the wake turbulence.

### BACKGROUND OF THE DISCLOSURE

Aircraft are used to transport passengers and cargo between various locations. Numerous aircraft depart from and arrive at a typical airport every day.

An aircraft in flight within an airspace generates wake turbulence, which forms counter-rotating vortices behind the aircraft. Wake turbulence from an aircraft can affect other aircraft within a defined range.

Typically, a pilot of an aircraft is alerted to wake turbulence from air traffic control. In general, air traffic personnel contact the pilot and verbally inform the pilot of potential wake turbulence within an airspace.

However, air traffic control may not always be able to promptly inform a pilot of wake turbulence. In such situations, air traffic control may forego verbally informing a pilot of wake turbulence, and instead instruct the pilot to maintain visual separation.

### SUMMARY OF THE DISCLOSURE

A need exists for a system and a method for detecting wake turbulence of aircraft within an airspace. Further, a need exists for a system and a method for effectively and efficiently alerting an operator of an aircraft of wake turbulence that can potentially affect the aircraft.

With those needs in mind, certain examples of the present disclosure provide a system including a control unit configured to monitor a first position of an ownship aircraft within an airspace, determine a projected path for the ownship aircraft within the airspace, monitor a second position of a target aircraft within an airspace, and determine a projected wake turbulence of the target aircraft within the airspace. The ownship aircraft is configured to be operated to avoid the projected wake turbulence.

In at least one example, the control unit is further configured to output a wake turbulence alert to the ownship aircraft in response to detecting that the projected path of the ownship aircraft intersects one or more portions of the projected wake turbulence of the target aircraft. In at least one example, the ownship aircraft includes a user interface including one or both of a display or a speaker. The control unit is further configured to one or both of show the wake turbulence alert on the display or broadcast the wake turbulence alert through the speaker.

In at least one example, the control unit is configured to determine the projected wake turbulence based on the second position of the target aircraft, weather within the airspace, and one or both of a size or a shape of the target aircraft. The weather includes a wind speed and wind direction.

In at least one example, the control unit is further configured to filter out one or more other target aircraft that do not affect the ownship aircraft. For example, the control unit is configured to filter based on whether the one or more other target aircraft are (a) airborne, (b) within a predetermined zone of the ownship aircraft, (c) within a predetermined altitude of the ownship aircraft, and/or (d) large enough to affect the ownship aircraft.

In at least one example the ownship aircraft is configured to be automatically operated to avoid the projected wake turbulence. For example, the control unit is further configured to automatically operate one or more controls of the ownship aircraft to automatically operate the ownship aircraft to avoid the projected wake turbulence.

In at least one example, the control unit is an artificial intelligence or machine learning system.

Certain examples of the present disclosure provide a method including monitoring, by a control unit, a first position of an ownship aircraft within an airspace; determining, by the control unit, a projected path for the ownship aircraft within the airspace; monitoring, by the control unit, a second position of a target aircraft within an airspace; and determining, by the control unit, a projected wake turbulence of the target aircraft within the airspace, wherein the ownship aircraft is configured to be operated to avoid the projected wake turbulence.

### BRIEF DESCRIPTION OF THE DRAWINGS

Figure 1 illustrates a block diagram of a system, according to an example of the present disclosure.
Figure 2 illustrates a front view of a display, according to an example of the present disclosure.
Figure 3 illustrates a front view of a display, according to an example of the present disclosure.
Figure 4 illustrates a front view of a display, according to an example of the present disclosure.
Figure 5 illustrates a flow chart of a method, according to an example of the present disclosure.
Figure 6 illustrates a schematic block diagram of a control unit, according to an example of the present disclosure.
Figure 7 illustrates a perspective front view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the present disclosure provide systems and methods including a control unit configured to detect wake turbulence of target aircraft within an airspace, and provide an alert to an operator of an aircraft (for example, an ownship aircraft) of the wake turbulence that can affect the aircraft. In at least one example, the control unit analyzes available traffic data and weather data, such as received by an automatic dependent surveillance-broadcast (ADS B) receiver during flight. The control unit further calculates wake turbulence behind the target aircraft that reacts to current winds, and follows a defined wake turbulence flight path. In at least one example, the control unit determines wake turbulence based on aircraft type, past position (including track, altitude, and airspeed), and current winds aloft data. The wake turbulence, as determined by the control unit, dynamically morphs as it descends and dissipates over time. In response to the control unit detecting that a projected path of the aircraft intersects a determined wake turbulence of the target aircraft, the control unit outputs an alert, such as a visual and/or aural caution message, which can be displayed and/or broadcast via a user interface of the aircraft.

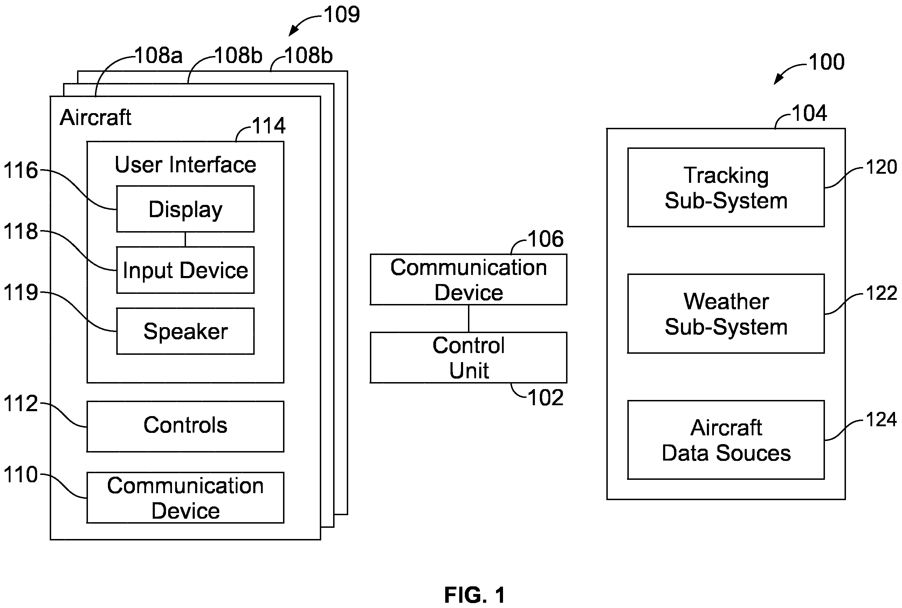

Figure 1 illustrates a block diagram of a system 100, according to an example of the present disclosure. The system 100 includes a control unit 102 in communication with a plurality of flight information sources 104, such as through one or more wired or wireless connections. For example, the control unit 102 can be coupled to a communication device 106 that receives data from the flight information sources 104. The communication device 106 can be one or more of an antenna, a transceiver, an internet connection, a cloud-based connection, and/or the like.

The control unit 102 is also in communication with one or more aircraft 108 within an airspace 109, such as via communication between the communication device 106 and a communication device 110 of the aircraft 108. The communication device 110 can be an antenna, a transceiver, an internet connection, a cloud-based connection, and/or the like. In at least one example, the control unit 102 is separate and distinct from the aircraft 108. For example, the control unit 102 can be located at a central monitoring location, which can be remote from, or optionally co-located with, one or more of the flight information sources 104. As another example, the control unit 102 can be onboard the aircraft 108, such as within a flight deck or cockpit. For example, the control unit 102 can be part of a flight computer of the aircraft 108.

The aircraft 108 includes controls 112 configured to allow an operator, such as a pilot, to control operation of the aircraft 108. For example, the controls 112 include one or more of a control handle, yoke, joystick, control surface controls, accelerators, decelerators, and/or the like.

The aircraft 108 also includes one or more user interfaces 114. For example, a user interface 114 can be within a flight deck or cockpit of the aircraft 108. In at least one example, a user interface 114 includes a display 116 and an input device 118. In at least one example, the display 116 is an electronic device configured to electronically show images, videos, text, and/or the like. The display 116 can be a monitor, screen, television, touchscreen, and/or the like. The input device 118 can include a keyboard, mouse, stylus, touchscreen interface (that is, the input device 118 can be integral with the display 116), and/or the like. The display 116 is configured to show visual graphics, videos, text, and/or the like. The user interface 114 can also include a speaker 119, which is configured to broadcast audio messages. The user interface 114 can be, or part of, a computer workstation. For example, the user interface 114 can be part of the flight computer within the flight deck or cockpit of the aircraft 108. As another example, the user interface 114 can be a handheld device, such as a smart phone, tablet, or the like.

In at least one example, the control unit 102 can be in communication with a user interface 114 that is not onboard an aircraft 108, in addition to (or optionally instead of) the user interface 114 onboard one or more aircraft 108. For example, the user interface 114 can be at a land-based monitoring location, such as with respect to air traffic control, a flight dispatcher, an airline operations center, and/or the like.

The control unit 102 receives data from the flight information sources 104. The data includes vast amounts of information from numerous different flight information sources 104. The flight information sources 104 include a tracking sub-system 120, which is configured to track the various aircraft 108 on the ground and in the airspace 109. In at least one example, the tracking sub-system 120 is configured to track positions of the aircraft 108 in real time. In at least one example, the tracking sub-system 120 is a radar sub-system. As another example, the tracking sub-system is an automatic dependent surveillance-broadcast (ADS-B) tracking sub-system. Real time positions of the aircraft 108 on the ground and within an airspace are detected by the tracking sub-system 120 that receives position signals output by position sensors of the aircraft 108. For example, the tracking sub-system 120 receives ADS-B signals output by the position sensors of the aircraft 108. As another example, the position sensors of the aircraft 108 can be global positioning system sensors. The position sensors output signals indicative of one or more of the position, altitude, heading, acceleration, velocity, and/or the like of the aircraft 108. The signals are received by the tracking sub-system 120.

The flight information sources 104 also include a weather sub-system 122, which provides past, current, and predicted weather for locations of the aircraft 108, airports, and the like. As an example, the weather sub-system 122 can include a weather station, channel, or the like. As another example, the weather sub-system 122 can include aeronautical weather services that provide weather notifications at various locations, such as airports. An example of data from a weather sub-system 122 includes a meteorological aerodrome report (METAR). The weather sub-system 122 detects current weather conditions within the airspace 109, such as air temperatures, wind speeds and directions, air pressure, precipitation, and the like within the airspace 109.

The flight information sources 104 also include aircraft data sources 124, which provide information about the various aircraft. For example, the aircraft data sources 124 include information regarding a type, size, shape, and capabilities of the aircraft 108. The aircraft data sources 124 can be information provided by a manufacturer, maintenance provider, operator, and/or the like of the aircraft 108.

In at least one example, the aircraft data sources 124 can provide tail-specific information regarding the aircraft 108. The tail-specific information for the aircraft 108 provides information regarding the performance of the specific, actual aircraft, in contrast to a different test aircraft, a general performance model, or the like. Optionally, the aircraft data sources 124 can provide general information regarding the type of aircraft 108.

In operation, the control unit 102 determines a wake turbulence for one or more of the aircraft 108 within the airspace 109. For example, the control unit 102 determines a wake turbulence generated by each aircraft 108 within the airspace 109. The control unit 102 determines the wake turbulence for the aircraft 108 as function of a tracked position of the aircraft 108, as received from the tracking sub-system 120, weather within the airspace 109, as received from the weather sub-system 122, and the features of the aircraft 108, such as received from the aircraft data sources 124. The position of the aircraft 108 includes the location, airspeed, heading, altitude, and the like of the aircraft 108 within the airspace 109. The weather includes wind direction and speed at various altitudes within the airspace 109. The features of the aircraft 108 include the size and shape of the aircraft 108.

In at least one example, the control unit 102 determines a position of a particular aircraft 108, such as an ownship aircraft 108a within the airspace 109, from data received from the tracking sub-system 120. The control unit 102 outputs a signal showing the position of the ownship aircraft 108a on the display 116. The control unit 102 further determines a projected path for the ownship aircraft 108. The projected path for the ownship aircraft 108a can be a projected future path for the aircraft, such as a predetermined period of time into the future. The predetermined period of time can be 30 seconds, 1 minute, 2 minutes, or the like. The projected future path is determined by the control unit 102 from the current location, heading, airspeed, altitude, and the like of the aircraft 108.

The control unit 102 further determines the positions of other aircraft 108, such as target aircraft 108b that are different from the ownship aircraft 108a, within the airspace 109. For the target aircraft 108b, the control unit 102 further determines a wake turbulence generated thereby. The control unit 102 determines the wake turbulence for the target aircraft 108b based on the position of the target aircraft 108b (including one or more of the location, heading, airspeed, altitude, and/or the like) received from the tracking sub-system 120, the data regarding the target aircraft 108b (such as size, shape, and optionally a predetermined wake turbulence trailing the target aircraft) as received from the aircraft data sources 124, and weather data including wind speed and direction as received from the weather sub-system 122. Thus, the control unit 102 determines a wake turbulence for the target aircraft 108b as a function of tracked position of the target aircraft 108b, the size and/or shape of the target aircraft 108b, and the weather within the airspace 109 in which the target aircraft is flying.

The control unit 102 can further show the target aircraft 108b in relation to the ownship aircraft 108a on the display 116. The control unit 102 further monitors the projected path for the ownship aircraft 108a in relation to the wake turbulence of the target aircraft 108b. If the projected path of the ownship aircraft 108a does not intersect the wake turbulence of the target aircraft 108b, the control unit 102 continues monitoring and does not output an alert. If, however, the projected path of the ownship aircraft 108a intersects the wake turbulence of the target aircraft 108b, the control unit 102 outputs a wake turbulence alert to the ownship aircraft 108a. For example, the control unit 102 operates the display 116 of the ownship aircraft 108a to show a wake turbulence alert message (such as a graphic and/or text) regarding wake turbulence. As another example, the control unit 102 can broadcast an audible wake turbulence alert message through the speaker 119. In at least one example, the control unit 102 shows the wake turbulence alert on the display 116 and broadcasts the wake turbulence alert through the speaker 119.

In at least one example, the control unit 102 filters traffic information for relevant wake turbulence information. That is, the control unit 102 can filter out one or more other target aircraft having wake turbulence that do not affect the ownship aircraft 102a. For example, the control unit 102 determines if a target aircraft 108b is airborne within the airspace 109. If the target aircraft 108b, as tracked by the tracking sub-system 120, is not airborne, the control unit 102 removes the target aircraft 108b from further analysis, as an aircraft 108 on the ground may not generate wake turbulence.

If, however, the control unit 102 determines that the target aircraft 108b is airborne, the control unit 102 then determines if the target aircraft 108b is within a predetermined zone of the ownship aircraft 108a. The predetermined zone a portion of the airspace 109 in front of the ownship aircraft 108a. For example, based on the current position of the ownship aircraft 108a, which is tracked by the tracking sub-system 120, the predetermined zone can be five minutes laterally, and five minutes forward. Optionally, the predetermined zone can be less than five minutes (such as 2 or 3 minutes), or greater than five minutes (such as 10 or 15 minutes). If the target aircraft 108b is outside of the predetermined zone, the control unit 102 removes the target aircraft 108b from further analysis.

If, however, the target aircraft 108b is within the predetermined zone, the control unit 102 then determines if the target aircraft 108b is within a predetermined altitude of the ownship aircraft 108a. For example, the predetermined altitude can be 3000 feet or less above or below the ownship aircraft 108a. Optionally, the predetermined altitude can be less than 3000 feet (such as 2000 or 2500 feet) or greater than 3000 feet (such as 4000 or 5000 feet). If the target aircraft 108b is outside of the predetermined altitude, the control unit 102 removes the target aircraft 108b from further analysis.

If, however, the target aircraft 108b is within the predetermined altitude, the control unit 102 determines if the target aircraft 108b is large enough (such as within a particular wake category) to affect the ownship aircraft 108a. The control unit 102 receives data regarding the size, shape, weight, and the like of the aircraft 108 from the aircraft data sources 124. Predetermined comparative data between different sizes of aircraft can be used to determine whether the target aircraft 108b is large enough to generate sufficient wake so as to affect the ownship aircraft 108a. As an example, the wake turbulence of a small, single propeller aircraft may not affect a large jet aircraft, such as a Boeing 747. If the control unit 102 determines that the target aircraft 108b is too small to affect the ownship aircraft 108a, the control unit 102 discards the target aircraft 108b from further analysis.

As described, the control unit 102 continues to analyze the target aircraft 108b based on the target aircraft 108b being airborne, within a predetermined zone and predetermined altitude of the ownship aircraft 108a, and large enough to generate a wake turbulence that can potentially affect the ownship aircraft 108a. Conversely, the control unit 102 filters out the target aircraft 108b from further analysis if the target aircraft 108b is not airborne, outside of the predetermined zone and/or the predetermined altitude, and/or too small to generate a wake turbulence that can potentially affect the ownship aircraft 108a.

If after the filtering operation described above the control unit 102 continues to analyze the target aircraft 108b in relation to the ownship aircraft 108a, the control unit 102 determines and projects a wake turbulence for the target aircraft 108b. The projected wake turbulence for the target aircraft 108b can be based on predetermined data for the target aircraft 108b. For example, the projected wake turbulence for the target aircraft 108b can be determined from particular regulations from one or more regulatory authorities (such as the United States Federal Aviation Administration (FAA)), such as in relation to radar separation for aircraft.

The control unit 102 projects the wake turbulence behind the target aircraft 108b, which continues to be tracked by the tracking sub-system 120. The control unit 102 can further base the wake turbulence based on a historical path of the target aircraft 108b while airborne, such as the historical path of the target aircraft from a preceding 30 seconds, 1 minute, 2 minutes, or more. The control unit 102 can further project the wake turbulence based on a wing span or width of the target aircraft 108b, as received from the aircraft data sources 124. For example, the control unit 102 determines as width of the wake turbulence of the target aircraft as a width of the wingspan of the target aircraft 108b.

In at least one example, the control unit 102 further projects the wake turbulence behind the target aircraft 108b based on a predetermined descent rate. For example, the control unit 102 determines that a wake turbulence generated at an initial altitude descends at a predetermined rate, such as 400 feet per minute. As an example, a wake turbulence generated at a particular position at an initial altitude of 2000 feet will be at 1200 feet two minutes after initially generated.

In at least one example, the control unit 102 further projects the wake turbulence based on a wind correction. The control unit 102 receives weather data, including wind speed and direction, from the weather sub-system 122. The wind affects the wake turbulence. That is, depending on wind speed and direction, the wake turbulence generated by the target aircraft 108b moves in response thereto. The control unit 102 provides a wind correction for the projected wake turbulence.

As described, in at least one example, the control unit 102 determines a projected wake turbulence behind the target aircraft 108b based on one or more of a determined wake length (such as based on data from one or more regulatory authorities), a historical path of the target aircraft 108b, a wing width (that is, a wingspan from wing tip to wing tip) of the target aircraft 108b, a descent rate of the wake turbulence, and/or weather conditions, such as wind direction and wind speed. In at least one example, the control unit 102 determines a projected wake turbulence behind the target aircraft 108b based on the determined wake length (such as based on data from one or more regulatory authorities), the historical path of the target aircraft 108b, the wing width (that is, a wingspan from wing tip to wing tip) of the target aircraft 108b, the descent rate of the wake turbulence, and the weather conditions, such as the wind direction and the wind speed.

The control unit 102 shows the ownship aircraft 108a and the target aircraft 108b, as tracked by the tracking sub-system 120, on the display 116 of the ownship aircraft 108a. If the projected path of the ownship aircraft 108a does not intersect the projected wake turbulence of the target aircraft 108b, the control unit 102 continues to monitor the ownship aircraft 108a and the target aircraft 108b without outputting a wake turbulence alert. If, however, the projected path of the ownship aircraft 108a intersects the projected wake turbulence of the target aircraft 108b, the control unit 102 outputs the wake turbulence alert to the ownship aircraft 108a. The wake turbulence alert can be shown on the display 116 and/or broadcast through the speaker 119 of the ownship aircraft 108a. The control unit 102 can show the projected path of the ownship aircraft 108a and/or the projected wake turbulence of the target aircraft 108b on the display 116. Optionally, the control unit 102 may not show the projected path of the ownship aircraft 108a or the projected wake turbulence of the target aircraft 108b on the display 116.

In response to receiving the wake turbulence alert, the ownship aircraft 108a is operated to move out of the projected wake turbulence, and therefore out of wake turbulence generated by the target aircraft 108b. In at least one example, the ownship aircraft 108a can be automatically operated to move out of and/or remain outside of the projected wake turbulence. For example, one or more control units can automatically operate one or more of the controls 112 of the ownship aircraft 108a to ensure that the ownship aircraft 108a is outside of the projected wake turbulence. In at least one example, the control unit 102 automatically operates one or more of the controls 112 of the ownship aircraft 108a to ensure that the ownship aircraft 108a is outside of the projected wake turbulence of the target aircraft 108b. Optionally, the ownship aircraft 108a may not be automatically operated to remain outside of the projected wake turbulence.

The projected path of the ownship aircraft 108a can be a projected line for a predetermined time period into the future (such as 30, 35, 40, 45, 60 seconds or more) of the ownship aircraft 108a based on a current heading, airspeed, and altitude of the ownship aircraft 108a. In at least one example, the control unit 102 determines a pending time based on distance for an intersection of the projected path of the ownship aircraft 108a and the projected wake turbulence of the target aircraft 108b. The pending time decreases with decreased distance between the ownship aircraft 108a and the target aircraft 108b. Conversely, the pending time increases with increased distance between the ownship aircraft 108a and the target aircraft 108b. For example, the pending time can be 2 seconds or more for the detected intersection between the projected path of the ownship aircraft 108a and the projected wake turbulence of the target aircraft 108b when the ownship aircraft 108a and the target aircraft 108b are a relatively far distance from each other (such as 3000 feet). As the relative distance between the ownship aircraft 108a and the target aircraft 108b decreases, the pending time decreases. For example, if the relative distance is 1000 feet or less, the pending time can be 0.5-1 second. If the intersection between the projected path of the ownship aircraft 108a and the projected wake turbulence of the target aircraft 108b exceeds the pending time, the control unit 102 outputs the wake turbulence alert to the ownship aircraft 108a. If, however, the intersection is less than the pending time, the control unit 102 refrains from outputting the wake turbulence alert. In this manner, the control unit 102 refrains from alerting pilots of aircraft 108 that are only in a projected wake turbulence for a brief period of time (such as if maneuvering to a different heading, altitude, or the like).

In at least one example, the control unit 102 can also determine a predetermined cool down time with respect to a wake turbulence alert for a particular target aircraft 108b. For example, in response to outputting a wake turbulence alert for a target aircraft 108b, the control unit 102 may refrain from outputting another wake turbulence alert for that particular target aircraft for a predetermined period of time (such as 30, 45, or 60 seconds). In this manner, the control unit 102 may refrain from outputting repetitive wake turbulence alerts. Optionally, the control unit 102 may not determine a predetermined cool down time.

As described herein, the system 100 includes the control unit 102, which is configured to monitor a first position of the ownship aircraft 108a within the airspace 109. The control unit 102 is further configured to determine a projected path for the ownship aircraft 108a within the airspace 109. The control unit 102 is further configured to monitor a second position of one or more target aircraft 108b within the airspace 109, and determine a projected wake turbulence of the target aircraft(s) 108b within the airspace 109. The ownship aircraft 108a is operated to avoid the projected wake turbulence, such as by remaining outside of the projected wake turbulence, or moving outside of the projected wake turbulence. In at least one example, the ownship aircraft 108a can be automatically operated, such as by one or more control units (for example, the control unit 102) to avoid the projected wake turbulence. In at least one example, the control unit 102 outputs a wake turbulence alert to the ownship aircraft in response to detecting that the projected path intersects one or more portions of the projected wake turbulence.

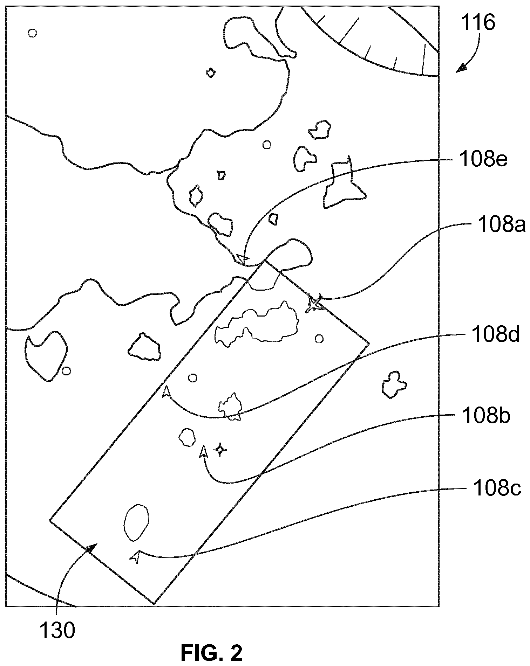

Figure 2 illustrates a front view of a display 116, according to an example of the present disclosure. Referring to Figures 1 and 2, the display 116 is of an ownship aircraft 108a. A position of the ownship aircraft 108a is shown on the display 116. The control unit 102 determines the predetermined zone 130 for the ownship aircraft 108a. As shown, the target aircraft 108b, 108c, and 108d are within the predetermined zone 130. Conversely, the target aircraft 108e is outside of the predetermined zone 130.

The control unit 102 can show the predetermined zone 130 on the display 116. Optionally, the control unit 102 may not show the predetermined zone 130 on the display 116.

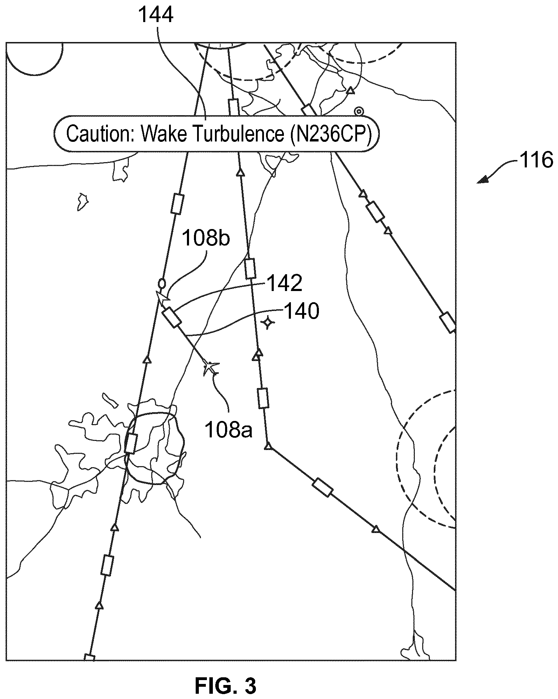

Figure 3 illustrates a front view of a display 116, according to an example of the present disclosure. Referring to Figures 1 and 3, the display 116 is of an ownship aircraft 108a. The control unit 102 determines a projected path 140 for the ownship aircraft 108a, and a projected wake turbulence 142 for a target aircraft 108b. In response to detecting that the projected path 140 of the ownship aircraft 108a intersects at least a portion of the projected wake turbulence 142 of the target aircraft 108b, the control unit 102 outputs a wake turbulence alert 144, which is shown on the display 116.

The control unit 102 can show the projected path 140 and the projected wake turbulence 142 on the display 116. Optionally, the control unit 102 may not show the projected path 140 and/or the projected wake turbulence 142 on the display 116.

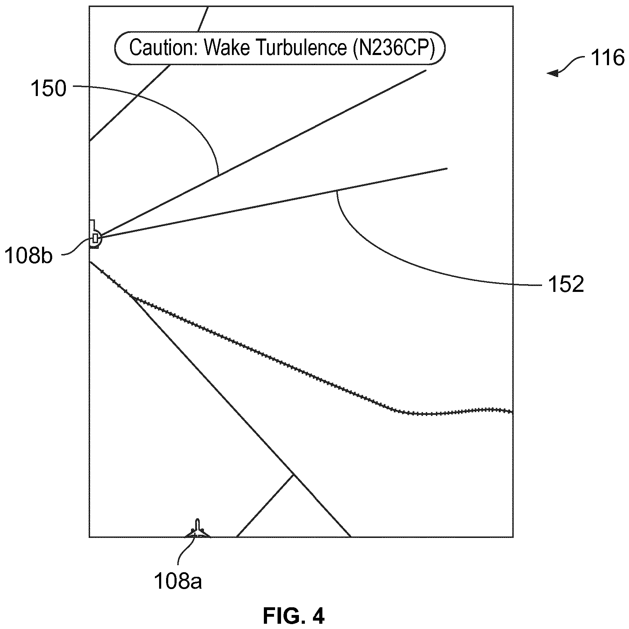

Figure 4 illustrates a front view of a display 116, according to an example of the present disclosure. As shown, a projected wake turbulence 150 of a target aircraft 108b is shifted from a historical path 152 of the target aircraft 108b. For example, the control unit 102 shifts the projected wake turbulence 150 from the historical path 152 based on weather data including wind speed and direction.

The control unit 102 can show the projected wake turbulence 150 and the historical path 152 on the display 116. Optionally, the control unit 102 may not show the projected wake turbulence 150 and/or the historical path 152 on the display 116.

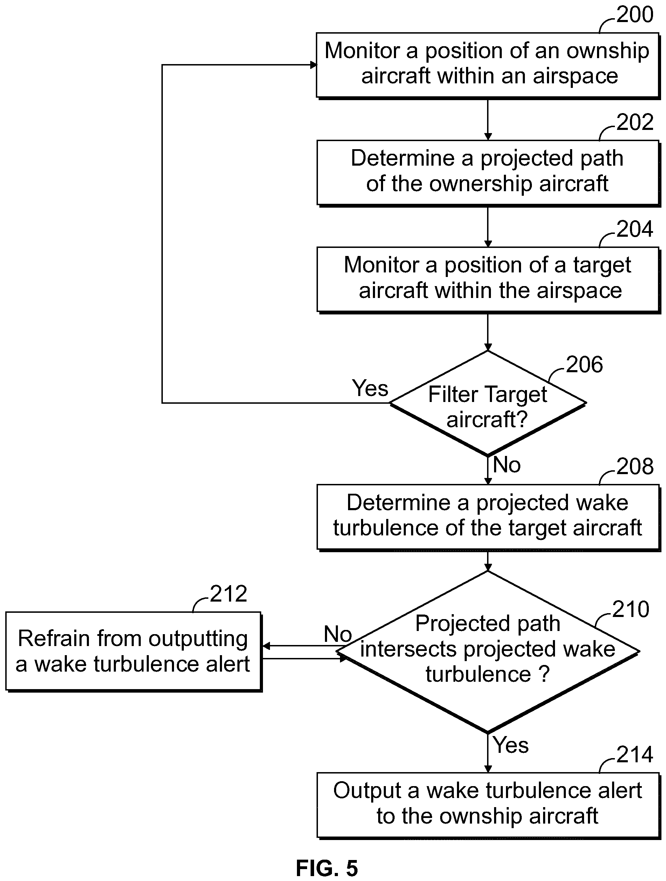

Figure 5 illustrates a flow chart of a method, according to an example of the present disclosure. Referring to Figures 1-5, at 200, the control unit 102 monitors a position of an ownship aircraft 108a within the airspace 109. At 202, the control unit 102 determines a projected path of the ownship aircraft 108a. At 204, the control unit 102 monitors a position of a target aircraft 108b within the airspace 109.

At 206, the control unit 102 determines whether or not to filer the target aircraft 108b from further analysis. If so, the method returns to 200. If, however, the control unit 102 does not filter the target aircraft 108b from further analysis, but instead continues to analyze the target aircraft 108b, the method proceeds from 206 to 208, at which the control unit 102 determines a projected wake turbulence of the target aircraft 108b. Next, at 210, the control unit 102 determines if the projected path of the ownship aircraft 108a intersects one or more portions of the projected wake turbulence of the target aircraft 108b. If not, the method proceeds from 210 to 212, at which the control unit 102 refrains from outputting a wake turbulence alert.

If, however, the projected path intersects one or more portions of the projected wake turbulence at 210, the method proceeds to 214, at which the control unit 102 outputs the wake turbulence alert to the ownship aircraft 108a. The control unit 102 may show the wake turbulence alert on the display 116 of the ownship aircraft 108a, and/or broadcast the wake turbulence alert through the speaker 119 of the ownship aircraft 108a. The ownship aircraft 108a is then operated to avoid the projected wake turbulence. For example, the ownship aircraft 108a is operated (either by one or more pilots, or automatically by one or more control units) to remain outside of the projected wake turbulence, and/or move outside of the projected wake turbulence.

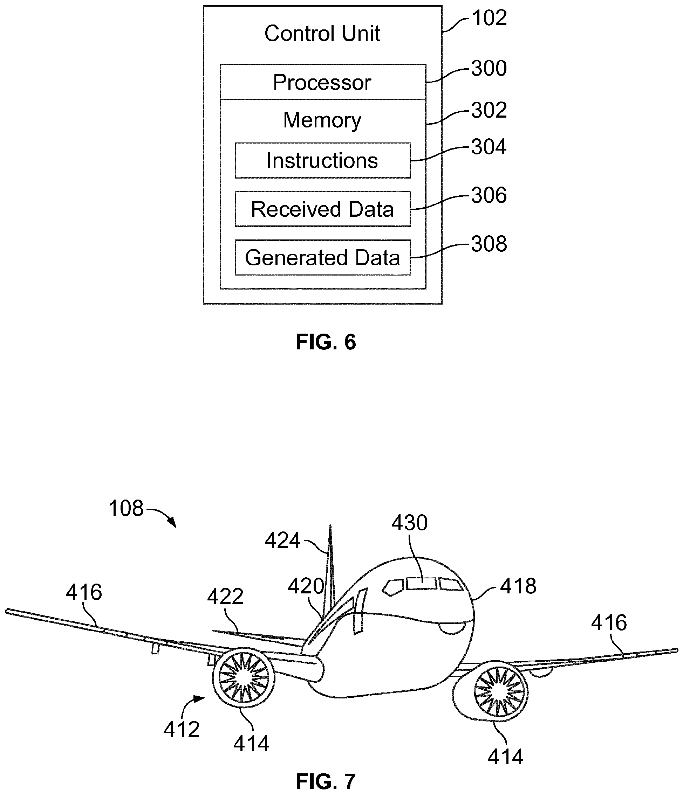

Figure 6 illustrates a schematic block diagram of the control unit 102, according to an example of the present disclosure. In at least one example, the control unit 102 includes at least one processor 300 in communication with a memory 302. The memory 302 stores instructions 304, received data 306, and generated data 308. The control unit 102 shown in Figure 6 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 102 may be or include one or more processors that are configured to control operation, as described herein.

The control unit 102 is configured to execute a set of instructions that are stored in one or more data storage units or elements (such as one or more memories), in order to process data. For example, the control unit 102 may include or be coupled to one or more memories. The data storage units may also store data or other information as desired or needed. The data storage units may be in the form of an information source or a physical memory element within a processing machine.

The set of instructions may include various commands that instruct the control unit 102 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 102. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 102 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to Figures 1-6, examples of the subject disclosure provide systems and methods that allow large amounts of data to be quickly and efficiently analyzed by a computing device. For example, the control unit 102 can receive and analyze data from hundreds, thousands, or more flight information sources 104 with respect to numerous ownship aircraft and numerous target aircraft. As such, large amounts of data, which may not be readily discernable by human beings, are being tracked and analyzed. The vast amounts of data are efficiently organized and/or analyzed by the control unit 102, as described herein. The control unit 102 analyzes the data in a relatively short time in order to quickly and efficiently determine projected wake turbulence, and output alerts when necessary. As such, examples of the present disclosure provide increased and efficient functionality, and vastly superior performance in relation to a human being reviewing the vast amounts of data.

In at least one example, components of the system 100, such as the control unit 102, provide and/or enable a computer system to operate as a special computer system for determining wake turbulences, and generating wake turbulence alerts. The control unit 102 improves upon standard computing devices by determining such information and automatically communicating with individuals (such as operators of aircraft) in an efficient and effective manner.

In at least one example, the control unit 102 uses machine learning algorithms which automatically consider factors that influence wake turbulence generated by aircraft. In at least one example, all or part of the systems and methods described herein are or otherwise include an artificial intelligence (AI) or machine-learning system that can automatically perform the operations of the methods also described herein. In at least one example, the control unit 102 can be or otherwise include a deterministic or rules based evaluation system. In at least one example, the control unit 102 can be an artificial intelligence or machine learning system. These types of systems may be trained from outside information and/or self-trained to repeatedly improve the accuracy with how data is analyzed to determine wake turbulence generated by aircraft, and output alert messages when necessary. Over time, these systems can improve by determining and communicating with increasing accuracy and speed, thereby significantly reducing the likelihood of any potential errors. For example, the AI or machine-learning systems can learn and determine models, associate such models with received data, and determine potential conflicts. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve the determinations and communications described herein. The training minimizes conflicts and interference by performing an iterative training algorithm, in which the systems are retrained with an updated set of data, and based on the feedback examined prior to the most recent training of the systems. This provides a robust analysis model that can better determine wake turbulence generated by aircraft, and determine when to output alert messages to ownship aircraft regarding wake turbulence within an airspace.

Figure 7 illustrates a perspective front view of an aircraft 108, according to an example of the present disclosure. The aircraft 108 includes a propulsion system 412 that includes engines 414, for example. Optionally, the propulsion system 412 may include more engines 414 than shown. The engines 414 are carried by wings 416 of the aircraft 108. In other examples, the engines 414 may be carried by a fuselage 418 and/or an empennage 420. The empennage 420 may also support horizontal stabilizers 422 and a vertical stabilizer 424. The fuselage 418 of the aircraft 108 defines an internal cabin 430, which includes a flight deck or cockpit, one or more work sections (for example, galleys, personnel carry-on baggage areas, and the like), one or more passenger sections (for example, first class, business class, and coach sections), one or more lavatories, and/or the like. Figure 7 shows an example of an aircraft 108. It is to be understood that the aircraft 108 can be sized, shaped, and configured differently than shown in Figure 7.

Further, the disclosure comprises examples according to the following clauses:
Clause 1. A system comprising:
   a control unit configured to:
      monitor a first position of an ownship aircraft within an airspace,
      determine a projected path for the ownship aircraft within the airspace,
      monitor a second position of a target aircraft within an airspace, and
      determine a projected wake turbulence of the target aircraft within the airspace,
   wherein the ownship aircraft is configured to be operated to avoid the projected wake turbulence.
Clause 2. The system of Clause 1, wherein the control unit is further configured to output a wake turbulence alert to the ownship aircraft in response to detecting that the projected path of the ownship aircraft intersects one or more portions of the projected wake turbulence of the target aircraft.
Clause 3. The system of Clause 2, wherein the ownship aircraft comprises a user interface including one or both of a display or a speaker, and wherein the control unit is further configured to one or both of show the wake turbulence alert on the display or broadcast the wake turbulence alert through the speaker.
Clause 4. The system of any of Clauses 1-3, wherein the control unit is configured to determine the projected wake turbulence based on the second position of the target aircraft, weather within the airspace, and one or both of a size or a shape of the target aircraft.
Clause 5. The system of Clause 4, wherein the weather comprises a wind speed and wind direction.
Clause 6. The system of any of Clauses 1-5, wherein the control unit is further configured to filter out one or more other target aircraft that do not affect the ownship aircraft.
Clause 7. The system of Clause 6, wherein the control unit is configured to filter based on whether the one or more other target aircraft are one or more of (a) airborne, (b) within a predetermined zone of the ownship aircraft, (c) within a predetermined altitude of the ownship aircraft, or (d) large enough to affect the ownship aircraft.
Clause 8. The system of Clause 7, wherein the control unit is configured to filter based on whether the one or more other target aircraft are (a) airborne, (b) within the predetermined zone of the ownship aircraft, (c) within the predetermined altitude of the ownship aircraft, and (d) large enough to affect the ownship aircraft.
Clause 9. The system of any of Clauses 1-8, wherein the ownship aircraft is configured to be automatically operated to avoid the projected wake turbulence.
Clause 10. The system of Clause 9, wherein the control unit is further configured to automatically operate one or more controls of the ownship aircraft to automatically operate the ownship aircraft to avoid the projected wake turbulence.
Clause 11. The system of any of Clauses 1-10, wherein the control unit is an artificial intelligence or machine learning system.
Clause 12. A method comprising:
   monitoring, by a control unit, a first position of an ownship aircraft within an airspace;
   determining, by the control unit, a projected path for the ownship aircraft within the airspace;
   monitoring, by the control unit, a second position of a target aircraft within an airspace; and
   determining, by the control unit, a projected wake turbulence of the target aircraft within the airspace,
   wherein the ownship aircraft is configured to be operated to avoid the projected wake turbulence.
Clause 13. The method of Clause 12, further comprising outputting, by the control unit, a wake turbulence alert to the ownship aircraft in response to detecting that the projected path of the ownship aircraft intersects one or more portions of the projected wake turbulence of the target aircraft.
Clause 14. The method of Clause 13, further comprising one or both of showing, by the control unit, the wake turbulence alert on a display of the ownship aircraft, or broadcasting, by the control unit, the wake turbulence alert through a speaker of the ownship aircraft.
Clause 15. The method of any of Clauses 12-14, wherein said determining the projected wake turbulence comprises determining the projected wake turbulence based on the second position of the target aircraft, weather within the airspace, and one or both of a size or a shape of the target aircraft, and wherein the weather comprises a wind speed and a wind direction.
Clause 16. The method of any of Clauses 12-15, further comprising filtering, by the control unit, one or more other target aircraft that do not affect the ownship aircraft, wherein said filtering is based on whether the one or more other target aircraft are one or more of (a) airborne, (b) within a predetermined zone of the ownship aircraft, (c) within a predetermined altitude of the ownship aircraft, or (d) large enough to affect the ownship aircraft.
Clause 17. The method of any of Clauses 12-16, further comprising automatically operating the ownship aircraft to avoid the projected wake turbulence.
Clause 18. The method of Clause 17, wherein said automatically operating comprises automatically operating, by the control unit, one or more controls of the ownship aircraft to automatically operate the ownship aircraft to avoid the projected wake turbulence.
Clause 19. The method of any of Clauses 12-18, wherein the control unit is an artificial intelligence or machine learning system.
Clause 20. A non-transitory computer-readable storage medium comprising executable instructions that, in response to execution, cause one or more control units comprising a processor, to perform operations comprising:
   monitoring a first position of an ownship aircraft within an airspace;
   determining a projected path for the ownship aircraft within the airspace;
   monitoring a second position of a target aircraft within an airspace; and
   determining a projected wake turbulence of the target aircraft within the airspace,
   wherein the ownship aircraft is configured to be operated to avoid the projected wake turbulence.

As described herein, examples of the present disclosure provide systems and methods for detecting wake turbulence of aircraft within an airspace. Further, examples of the present disclosure provide systems and methods for effectively and efficiently alerting an operator of an aircraft of wake turbulence that can potentially affect the aircraft.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system comprising:
a control unit configured to:
monitor a first position of an ownship aircraft within an airspace,
determine a projected path for the ownship aircraft within the airspace,
monitor a second position of a target aircraft within an airspace, and
determine a projected wake turbulence of the target aircraft within the airspace,
wherein the ownship aircraft is configured to be operated to avoid the projected wake turbulence.

2. The system of claim 1, wherein the control unit is further configured to output a wake turbulence alert to the ownship aircraft in response to detecting that the projected path of the ownship aircraft intersects one or more portions of the projected wake turbulence of the target aircraft.

3. The system of claim 1 or 2, wherein the control unit is configured to determine the projected wake turbulence based on the second position of the target aircraft, weather within the airspace, and one or both of a size or a shape of the target aircraft.

4. The system of any preceding claim, wherein the control unit is further configured to filter out one or more other target aircraft that do not affect the ownship aircraft.

5. The system of claim 4, wherein the control unit is configured to filter based on whether the one or more other target aircraft are one or more of (a) airborne, (b) within a predetermined zone of the ownship aircraft, (c) within a predetermined altitude of the ownship aircraft, or (d) large enough to affect the ownship aircraft.

6. The system of claim 5, wherein the control unit is configured to filter based on whether the one or more other target aircraft are (a) airborne, (b) within the predetermined zone of the ownship aircraft, (c) within the predetermined altitude of the ownship aircraft, and (d) large enough to affect the ownship aircraft.

7. The system of any preceding claim, wherein the ownship aircraft is configured to be automatically operated to avoid the projected wake turbulence.

8. The system of claim 7, wherein the control unit is further configured to automatically operate one or more controls of the ownship aircraft to automatically operate the ownship aircraft to avoid the projected wake turbulence.

9. A method comprising:
monitoring, by a control unit, a first position of an ownship aircraft within an airspace;
determining, by the control unit, a projected path for the ownship aircraft within the airspace;
monitoring, by the control unit, a second position of a target aircraft within an airspace; and
determining, by the control unit, a projected wake turbulence of the target aircraft within the airspace,
wherein the ownship aircraft is configured to be operated to avoid the projected wake turbulence.

10. The method of claim 9, further comprising outputting, by the control unit, a wake turbulence alert to the ownship aircraft in response to detecting that the projected path of the ownship aircraft intersects one or more portions of the projected wake turbulence of the target aircraft.

11. The method of any of claims 9-10, wherein said determining the projected wake turbulence comprises determining the projected wake turbulence based on the second position of the target aircraft, weather within the airspace, and one or both of a size or a shape of the target aircraft, and wherein the weather comprises a wind speed and a wind direction.

12. The method of any of claims 9-11, further comprising filtering, by the control unit, one or more other target aircraft that do not affect the ownship aircraft, wherein said filtering is based on whether the one or more other target aircraft are one or more of (a) airborne, (b) within a predetermined zone of the ownship aircraft, (c) within a predetermined altitude of the ownship aircraft, or (d) large enough to affect the ownship aircraft.

13. The method of any of claims 9-13, further comprising automatically operating the ownship aircraft to avoid the projected wake turbulence.

14. The method of claim 13, wherein said automatically operating comprises automatically operating, by the control unit, one or more controls of the ownship aircraft to automatically operate the ownship aircraft to avoid the projected wake turbulence.

15. A non-transitory computer-readable storage medium comprising executable instructions that, in response to execution, cause one or more control units comprising a processor, to perform operations comprising:
monitoring a first position of an ownship aircraft within an airspace;
determining a projected path for the ownship aircraft within the airspace;
monitoring a second position of a target aircraft within an airspace; and
determining a projected wake turbulence of the target aircraft within the airspace,
wherein the ownship aircraft is configured to be operated to avoid the projected wake turbulence.
